# EUROPÄISCHE PATENTANMELDUNG

(11) **EP 4 717 422 A1**
(43) Veröffentlichungstag der Anmeldung: **01.04.2026**
(21) Anmeldenummer: 24203238.1
(22) Anmeldetag: 27.09.2024
(51) Int. Cl.: B26D 5/30, B26D 5/34, B26D 1/22, B26D 7/10, B26D 7/26, B26D 7/27, B26D 1/00

(54) **VERFAHREN UND VORRICHTUNG ZUR HERSTELLUNG EINES KLEBEBANDES**

(71) Anmelder: Certoplast Technische Klebebänder GmbH, 42285 Wuppertal (DE)
(72) Erfinder: Rambusch, René, 42113 Wuppertal (DE); Leermann, Timo, 42369 Wuppertal (DE)
(74) Vertreter: Andrejewski - Honke Patent- und Rechtsanwälte Partnerschaft mbB

(57) **Zusammenfassung**

Gegenstand der vorliegenden Erfindung ist ein Verfahren zur Herstellung eines Klebebandes (1), insbesondere eines Wickelbandes zur Bündelung von Kabeln in Automobilen. Dazu wird ein textiles Trägerbandmaterial (3) gegebenenfalls inklusive Klebebeschichtung (5) von einer Abwickelrolle (4) in Längsrichtung (L) zugeführt und mittels einer Längs-Schneideinrichtung (8) in Längsstreifen geschnitten. Die Längs-Schneideinrichtung (8) weist wenigstens ein Rollenschneidmesser (8a) auf. Zusätzlich ist eine beheizbare Versiegelungseinrichtung (6) vorgesehen, mit deren Hilfe die Schnittkanten der Klebebänder (1) versiegelt werden. Erfindungsgemäß eilt die Versiegelungseinrichtung (6) der Längs-Schneideinrichtung (8) örtlich und zeitlich vor und definiert eine Versiegelungsspur (9) im Trägerbandmaterial (3), die von dem folgenden Rollenschneidmesser (8a) durchtrennt wird.

## Beschreibung

Die Erfindung betrifft ein Verfahren zur Herstellung eines Klebebandes, insbesondere eines Wickelbandes zur Bündelung von Kabeln in Automobilen, wonach ein textiles Trägerbandmaterial gegebenenfalls inklusive Klebebeschichtung von einer Abwickelrolle in Längsrichtung zugeführt und mittels einer Längs-Schneideinrichtung in Längsstreifen geschnitten wird, wonach ferner die Längs-Schneideinrichtung wenigstens ein Rollenschneidmesser aufweist, und wonach zusätzlich eine beheizbare Versiegelungseinrichtung vorgesehen ist, mit deren Hilfe die Schnittkanten der Klebebänder versiegelt werden.

Textiles Trägerbandmaterial wird typischerweise in Längsstreifen geschnitten, um hieraus Klebebänder herzustellen. Dazu werden die einzelnen Klebebänder auf Wickelrollen anschließend aufgewickelt und konfektioniert. Das textile Trägerbandmaterial kann in diesem Zusammenhang mit der Klebebeschichtung ein- oder beidseitig ausgerüstet und dann längs geschnitten werden. Es besteht aber auch die Möglichkeit, das textile Trägerbandmaterial ohne Klebebeschichtung zunächst längs zuschneiden und dann die einzelnen Längsstreifen mit der Klebebeschichtung auszurüsten.

Diese grundsätzliche Vorgehensweise wird beispielhaft in der auf die Anmelderin zurückgehende DE 10 2020 119 494 A1 beschrieben. An dieser Stelle durchläuft das Trägerbandmaterial und/oder durchlaufen die Längsstreifen zumindest noch einen Speicher. Die an dieser Stelle beschriebene Vorgehensweise hat sich grundsätzlich bewährt.

Das Einbringen von Längsschnitten mithilfe der Längs-Schneideinrichtung und die Darstellung von Längsstreifen aus dem textilen Trägerbandmaterial ist jedoch dann unter Umständen problematisch, wenn die Schnittkanten der auf dieser Weise hergestellten Klebebänder betrachtet werden. Tatsächlich besteht hier bei den Schnittkanten das Problem, dass sogenannte Ausfransungen beobachtet werden. Darüber hinaus kommt es zu Fussel-oder Fadenbildung, beispielsweise wenn Nähvliesträger in der beschriebenen Art und Weise verarbeitet werden. Solche Ausfransungen oder die Faden-bzw. Fusselbildung treten naturgemäß bei nicht-textilen Trägermaterialien in der Regel nicht auf, beispielsweise dann nicht, wenn Kunststofffolien zum Einsatz kommen.

Aus diesem Grund geht der gattungsbildende und den Ausgangspunkt darstellende Stand der Technik nach der DE 10 2023 105 349 A1 so vor, dass neben dem Rollenschneidmesser als Bestandteil der Längs-Schneideinrichtung zusätzlich noch die beheizbare Versiegelungseinrichtung vorgesehen ist. Mithilfe dieser Versiegelungseinrichtung können anschließend die mithilfe des Rollenschneidmessers hergestellten Schnittkanten der Klebebänder versiegelt werden.

Dazu wird im Detail beschrieben, dass die jeweilige Schnittkante der Klebebänder nach dem Schneiden mithilfe eines Versiegelungswerkzeuges thermisch soweit erhitzt wird, dass die das Textil bildenden Fasern und/oder Filamente zumindest partiell aufgeschmolzen werden. Dadurch bilden sich Verknüpfungspunkte zwischen den Fasern und/oder Filamenten. Bei dem Versiegelungswerkzeug handelt es sich um eine kammartige Einrichtung, wobei die einzelnen erhitzten Zinken zwischen die jeweiligen Längsstreifen eintauchen. Dadurch wird das in die Längsstreifen aufgeteilte Trägerbandmaterial mit seinen zuvor erzeugten Schnittkanten an den einzelnen erhitzten Zinken des kammartigen Versiegelungswerkzeuges vorbeigeführt und es kommt zu der beschriebenen Versiegelung der Schnittkanten.

Die beschriebene Vorgehensweise mag zwar generell für eine Versiegelung der erzeugten Schnittkanten sorgen. Allerdings ist der technologische und produktionstechnische Aufwand groß und wenig flexibel. Tatsächlich lassen sich die kammartigen Zinken hinsichtlich des Abstandes nicht verändern, sodass hiermit die Verarbeitung von textilem Trägermaterial und unterschiedlichen Breiten der auf diese Weise erzeugten Klebebänder nicht möglich ist. Vielmehr erfordert jede gewünschte Klebebandbreite letztlich ein eigenes und speziell ausgebildetes Versiegelungswerkzeug.

Hinzukommt, dass die Versiegelung zeitlich und örtlich nach dem Längsschnitt erfolgt. Dadurch werden an die Führung der zuvor erzeugten Längsstreifen bzw. Klebebänder mit ihren Schnittkanten im Vergleich zum Versiegelungswerkzeug hohe Anforderungen gestellt. D. h., die zuvor mithilfe des Rollenschneidmessers jeweils erzeugten Längsstreifen müssen exakt so geführt werden, dass sie in die Zwischenräume zwischen die Zinken einlaufen und mit ihren Schnittkanten entlang der Zinken geführt werden. Das setzt eine spezielle Bandführung voraus, die ebenfalls - wie das Versiegelungswerkzeug als solches - technologisch aufwendig und dementsprechend kostspielig und wenig flexibel ist. Hier setzt die Erfindung ein.

Der Erfindung liegt das technische Problem zugrunde, ein derartiges Verfahren zur Herstellung eines Klebebandes so weiterzuentwickeln, dass der technologische Aufwand verringert ist und die Herstellungskosten sinken. Außerdem soll eine flexible Herstellung von Klebebändern mit unterschiedlichen Breiten zur Verfügung gestellt werden. Ebenso eine zur Durchführung des Verfahrens geeignete Vorrichtung.

Zur Lösung dieser technischen Problemstellung schlägt die Erfindung ausgehend von einem gattungsgemäßen Verfahren zur Herstellung eines Klebebandes vor, dass die Versiegelungseinrichtung dem Rollenschneidmesser örtlich und zeitlich voreilt und eine Versiegelungsspur im Trägerbandmaterial definiert, die von dem folgenden Rollenschneidmesser durchtrennt wird.

Erfindungsgemäß und im Unterschied zum gattungsbildenden Stand der Technik nach der DE 10 2023 105 349 A1 wird also zunächst einmal so vorgegangen, dass die Versiegelungseinrichtung dem Rollenschneidmesser örtlich und zeitlich voreilt, wohingegen bei der bekannten Lehre die Versiegelungseinrichtung dem Rollenschneidmesser örtlich und zeitlich nachfolgt. Durch diese örtliche und zeitliche Nachfolge ergeben sich die zuvor skizzierten Nachteile, nämlich im Wesentlichen der erhöhte technologische Aufwand und die fehlende Flexibilität. Beide Nachteile hat die Erfindung überwunden.

Denn dadurch, dass die Versiegelungseinrichtung dem Rollenschneidmesser örtlich und zeitlich voreilt, findet keine nachträgliche Versiegelung der Schnittkanten statt. Vielmehr erfolgt diese Versiegelung gleichsam im Vorfeld, und zwar bevor die Schnittkanten in das textile Trägerbandmaterial eingebracht worden sind. Das gelingt mithilfe der Versiegelungsspur im Trägerbandmaterial.

Tatsächlich wird hier so vorgegangen, dass die Versiegelungseinrichtung für die Erzeugung der Versiegelungsspur im Trägerbandmaterial sorgt. In diesem Zusammenhang stellt die Versiegelungseinrichtung sicher, dass das Trägerbandmaterial im Bereich dieser zu erzeugenden Versiegelungsspur thermisch soweit erhitzt wird, dass die das Textil bildenden Fasern und/oder Filamente zumindest partiell aufgeschmolzen werden. Dadurch bilden sich Verknüpfungspunkte und damit ein gleichsam verfestigter Bereich des textilen Trägerbandmaterials, die Versiegelungsspur. Diese Versiegelungsspur verläuft nun in Längsrichtung des Trägerbandmaterials, und zwar in dem Bereich, in dem anschließend das Trägerbandmaterial mithilfe des örtlich und zeitlich folgenden Rollenschneidmessers durchtrennt wird. Hierfür sorgt der Transport des Trägerbandmaterials in Längsrichtung, gegenüber dem die Schneideinrichtung und die Versiegelungseinrichtung ortsfest verbleiben.

Aus diesem Grund werden in das in Längsrichtung transportierte Trägerbandmaterial so viele Versiegelungsspuren parallel zueinander und in Längsrichtung eingebracht, wie nachfolgend Schnittkanten erzeugt werden, um die auf diese Weise entstehenden Längsstreifen und damit die Klebebänder herstellen zu können. Dazu verfügt die jeweilige Versiegelungsspur über eine Spurbreite, die einerseits einen einwandfreien Schnitt in diesem verfestigten Bereich des Trägerbandmaterials mithilfe des Rollenschneidmessers ermöglicht und andererseits sicherstellt, dass nach dem Schnitt die auf diese Weise gebildeten Längsstreifen an den Schnittkanten versiegelt sind, weil die Schnittkanten erfindungsgemäß dadurch entstehen, dass die Versiegelungsspur im allgemeinen mittig durchtrennt wird.

Dabei wird meistens so vorgegangen, dass das Rollenschneidmesser die fragliche Versiegelungsspur im Sinne eines Quetschschnittes durchtrennt. Dazu kann auf übliche Rollenschneidmesser zurückgegriffen werden, beispielsweise solche, wie sie in der DE 103 05 874 A1 prinzipiell beschrieben werden.

Tatsächlich greift man hier typischerweise auf eine jeweils angetriebene rotierende Klinge zurück, die mithilfe einer frontseitigen und meistens im Querschnitt dreieckigen Klinge die Versiegelungsspur überwiegend mittig durchtrennt. Dazu wird das textile Trägerbandmaterial im Allgemeinen über eine gegenläufige Andrückwalze geführt, die beispielsweise eine Gummibeschichtung aufweisen kann, in der Regel hierauf allerdings verzichtet.

Bei diesem Vorgang wird im Allgemeinen so vorgegangen, dass das textile Trägerbandmaterial mit seinem klebebeschichtungsfreien Rücken mit der Versiegelungsspur ausgerüstet wird, die anschließend mithilfe des zugehörigen Rollenschneidmessers überwiegend mittig durchtrennt wird. Dazu weist die Versiegelungsspur eine vorgegebene Breite auf, die im allgemeinen 1 mm und mehr betragen kann. Es sind auch geringere Breiten der Versiegelungsspur von unter 1 mm denkbar, solange in die Versiegelungsspur nachfolgend der erforderliche Längsschnitt eingebracht werden kann und die erzeugten Längskanten unverändert versiegelt sind.

Meistens werden hier Spurbreiten der Versiegelungsspur von bspw. 1 bis 3 mm und mehr beobachtet. Es können auch Breiten der Versiegelungsspur von 3 bis 5 mm und mehr eingestellt werden. Außerdem ist die Auslegung so getroffen, dass das textile Trägerbandmaterial zu wenigstens 50 Masse-% aus Kunststoff besteht. Das kann im Detail so realisiert und umgesetzt werden, dass als textiles Trägerbandmaterial grundsätzlich ein Laminat eingesetzt wird, welches sich beispielhaft aus einem Gewebe oder Vlies und einer Kunststoffbeschichtung zusammensetzt. Dabei wird man die Auslegung im Allgemeinen so treffen, dass in diesem Fall die mit der Versiegelungsspur ausgerüstete Rückseite des textilen Trägerbandmaterials von dem Gewebe oder Vlies gebildet wird, wohingegen die Kunststoffbeschichtung nach innen weist und von vornherein oder anschließend die Klebebeschichtung trägt.

Wenn nun die Versiegelungsspur in das Gewebe bzw. Vlies eingebracht wird, sorgt primär die gleichsam darunter befindliche Kunststoffbeschichtung dafür, dass es zur Verfestigung im Bereich der Versiegelungsspur kommt, weil in diesem Fall hauptsächlich der Kunststoff der Kunststoffbeschichtung aufgeschmolzen wird, sodass sich die gewünschten verfestigten Bereiche bilden und damit die Versiegelungsspur erzeugen. Dies alles geschieht gleichsam automatisch dadurch, dass die Versiegelungseinrichtung ebenso wie das Rollenschneidmesser im Allgemeinen ortsfest angeordnet sind und demgegenüber das textile Trägerbandmaterial in Längsrichtung in Anlage hieran geführt wird.

Meistens kommt jedoch als textiles Trägerbandmaterial im Rahmen der Erfindung kein Laminat aus beispielsweise einem textilen Träger und einer Kunststoffbeschichtung zum Einsatz, was grundsätzlich auch möglich ist. Vielmehr zeichnet sich das textile Trägerbandmaterial erfindungsgemäß dadurch aus, dass hier typischerweise wenigstens eine oder mehrere textile Schichten beobachtet werden. Um in diesem Zusammenhang die nötige Schmelzfähigkeit zur Definition der Versiegelungsspur zu realisieren und umzusetzen, ist die Auslegung dabei so getroffen, dass das fragliche textile Trägerbandmaterial in diesem Fall aus wenigstens 50 Masse-% Kunststofffasern und/oder Kunststofffilamenten zusammengesetzt ist. Die Versiegelungseinrichtung sorgt nun dafür, dass die betreffenden Kunststofffasern und/oder Kunststofffilamente im Trägerbandmaterial soweit erhitzt werden, dass diese zumindest im Bereich der Versiegelungsspur aufschmelzen und die zuvor bereits angesprochenen Verknüpfungspunkte zwischen den Kunststofffasern und/oder Kunststofffilamenten ausbilden.

Als Folge hiervon führt dies dazu, dass die Kunststofffäden und/oder Kunststofffilamente wenigstens bis zu einer Teildicke des Trägerbandmaterials im Vergleich zur Gesamtdicke miteinander zu der Versiegelungsspur schmelzend verbunden werden. Bei dieser Teildicke handelt es sich um zumindest 20 % und insbesondere wenigstens 50% der Gesamtdicke des Trägerbandmaterials.

D. h., die Versiegelungseinrichtung sorgt im Bereich der Versiegelungsspur dafür, dass die Kunststofffasern und/oder Kunststofffilamente zumindest partiell aufgeschmolzen werden. Dadurch bilden sich die bereits angesprochenen Verknüpfungspunkte und folglich ein verfestigter Bereich des Trägerbandmaterials. Dieser verfestigte Bereich weist nicht nur eine bestimmte Spurbreite der auf diese Weise erzeugten Versiegelungsspur auf. Sondern zugleich deckt dieser verfestigte Bereich eine Spurtiefe ab, die zur Teildicke des Trägerbandmaterials im Vergleich zur Gesamtdicke korrespondiert. Im Bereich dieser Spurtiefe sind die Kunststofffasern und/oder Kunststofffilamente miteinander schmelzend verbunden. Die Spurtiefe und die hiermit verbundene Teildicke des Trägerbandmaterials im Vergleich zur Gesamtdicke beträgt dabei wenigstens 20% und mehr, regelmäßig 50% und mehr der Gesamtdicke.

D. h., erfindungsgemäß ist es grundsätzlich auch denkbar, dass die Versiegelungsspur und der hierdurch definierte verfestigte Bereich bezogen auf die Gesamtdicke des Trägerbandmaterials die Gesamtdicke des Trägerbandmaterials nicht vollständig erfasst, sondern nur bis zu der angesprochenen Spurtiefe, d. h. meistens zu 20% und mehr im Vergleich zur Gesamtdicke. Dadurch ist nach wie vor einerseits gewährleistet, dass das Trägerbandmaterial im Bereich der Versiegelungsspur sauber durchtrennt werden kann und andererseits die auf diese Weise gebildeten Schnittkanten keine Ausfransungen, Fusselbildung oder Fadenbildung zeigen.

Im Allgemeinen wird jedoch so vorgegangen, dass die Versiegelungsspur zu einer Verfestigung des Trägerbandmaterials unter Berücksichtigung der mithilfe der Versiegelungseinrichtung eingestellten Spurbreite und einer Spurtiefe führt, die im Wesentlichen der Gesamtdicke des Trägerbandmaterials entspricht. In diesem Fall erfasst die Versiegelung in der Versiegelungsspur also das Trägerbandmaterial über seine gesamte Dicke. Dadurch ist sichergestellt, dass die anschließend mithilfe des zugehörigen Rollenschneidmessers erzeugten Schnittkanten auch über ihre gesamte Breite gesehen keinerlei Ausfransungen oder Fadenbildung oder sonstige Unzulänglichkeiten zeigen. Hierin sind die wesentlichen Vorteile zu sehen.

Nach weiterer vorteilhafter Ausgestaltung können die Versiegelungseinrichtung und das Rollenschneidmesser eine Funktionseinheit definieren. Dabei bietet es sich an, dass die Versiegelungseinrichtung und das Rollenschneidmesser beispielsweise an einen gemeinsamen Halter angeschlossen werden. Dadurch ist von vornherein ihre gegenseitige Ausrichtung gewährleistet und es sind zusätzliche Maßnahmen zur Ausrichtung nicht erforderlich.

Tatsächlich wird hierdurch sichergestellt, dass die voreilende Versiegelungseinrichtung die Versiegelungsspur in Längsrichtung definiert und anschließend das Rollenschneidmesser die Versiegelungsspur größtenteils mittig durchtrennt, wobei infolge der Breite bzw. Spurbreite der Versiegelungsspur hierdurch zugleich die ebenfalls versiegelten Schnittkanten beobachtet werden. Ausfransungen, Faden- oder Faserbildung im Bereich der Schnittkanten treten damit nicht auf.

Es kann aber auch so vorgegangen werden, dass die Versiegelungseinrichtung und das Rollenschneidmesser funktional getrennt voneinander ausgebildet sind. In diesem Fall mag so vorgegangen werden, dass das textile Trägerbandmaterial zunächst mit der Versiegelungseinrichtung behandelt wird und die eine oder die mehreren Versiegelungsspuren eingebracht werden. Das geschieht im Allgemeinen an der Rückseite des Trägerbandmaterials, also an der Seite, welche der Klebebeschichtung abgewandt ist. Sofern keine Klebebeschichtung zu diesem Zeitpunkt aufgebracht ist, kann das textile Trägerbandmaterial natürlich auch von beiden Seiten her mit der Versiegelungsspur ausgerüstet werden.

Jedenfalls kommt es bei dieser funktionalen Trennung zwischen der Versiegelungseinrichtung und dem Rollenschneidmesser zunächst dazu, dass die Versiegelungsspur in das textile Trägerbandmaterial eingebracht und dieses anschließend aufgewickelt wird. In einem zeitlich und örtlich nachgeschalteten Schritt kann dann das textile Trägerbandmaterial mit der eingebrachten Versiegelungsspur bzw. den mehreren eingebrachten Versiegelungsspuren in Längsrichtung geschnitten werden. Dazu wird das textile Trägerbandmaterial mit der betreffende Versiegelungsspur abgewickelt und dem einen oder den mehreren Rollenschneidmessern zugeführt. In diesem Zusammenhang ist dann zusätzlich vorgesehen, dass das Rollenschneidmesser mithilfe einer Sensorvorrichtung gegenüber der Versiegelungsspur ausgerichtet wird, oder umgekehrt. Die Sensorvorrichtung stellt also sicher, dass das Rollenschneidmesser einerseits die Versiegelungsspur "trifft" und andererseits die Versiegelungsspur auch tatsächlich mittig mithilfe des Rollenschneidmessers durchtrennt wird.

Zu diesem Zweck kann die Sensorvorrichtung die Versiegelungsspur abtasten. Das gelingt beispielhaft optisch mithilfe einer Kamera und durch Bildvergleich. Selbstverständlich sind auch andere Abtastmöglichkeiten denkbar, beispielsweise taktil, indem ein Taster über das Trägerbandmaterial fährt und die Versiegelungsspur als besonders "glatten" Bereich erfasst. Darüber hinaus liegt es natürlich im Rahmen der Erfindung, die Sensorvorrichtung auch dann zu realisieren und umzusetzen, wenn die Versiegelungseinrichtung und das Rollenschneidmesser die Funktionseinheit definieren.

Wie bereits erläutert, wird das textile Trägerbandmaterial zumindest größtenteils aus Kunststofffasern und/oder Kunststofffilamenten beziehungsweise Kunststofffäden hergestellt. Tatsächlich kommt an dieser Stelle für das textile Trägerbandmaterial wenigstens 50 Masse-% Kunststoff zum Einsatz. Dabei besteht zusätzlich noch die weitergehende Möglichkeit, dass neben den Kunststofffasern und/oder Kunststofffilamenten auch beispielsweise Naturfasern zum Einsatz kommen können. D. h., mithilfe der erfindungsgemäßen Vorgehensweise können grundsätzlich auch textile Trägerbandmaterialien behandelt und geschnitten werden, die sich aus Naturfasern und Kunststofffasern zusammensetzen, solange der Anteil der Kunststofffasern im Beispielfall überwiegt, nämlich 50 Masse-% und mehr bezogen auf die Masse des textilen Trägerbandmaterials beträgt.

Die Versiegelungseinrichtung arbeitet grundsätzlich auf zweierlei Art und Weise, um die Versiegelungsspur in das Trägerbandmaterial einzubringen. Tatsächlich ist es denkbar, dass die Versiegelungseinrichtung kontaktlos oder kontaktgebunden die Versiegelungsspur erzeugt. Dabei kann die Versiegelungseinrichtung insgesamt oberhalb des Schmelzpunktes des Trägerbandmaterials und insbesondere oberhalb des Schmelzpunktes des eingesetzten Kunststoffes erhitzt werden. Durch Kontakt der Versiegelungseinrichtung mit dem Trägerbandmaterial wird anschließend die Versiegelungsspur erzeugt. Bei dieser Variante kann es sich bei der Versiegelungseinrichtung im einfachsten Fall um einen erhitzten Steg oder auch eine erhitzte Rolle oder dergleichen handeln. Die Rolle mag sich dabei vergleichbar wie das Rollenschneidmesser an dem in Längsrichtung durchlaufenden Trägerbandmaterial abwälzen oder wird angetrieben. Denn die Versiegelungseinrichtung ist ebenso wie das Rollenschneidmesser typischerweise ortsfest ausgelegt, sodass es durch die Längsbewegung des textilen Trägerbandmaterials hieran zu der beschriebenen Wälzbewegung kommt.

Sofern die Versiegelungseinrichtung kontaktlos die Versiegelungsspur im Trägerbandmaterial erzeugt, wird dies im Allgemeinen so vorgenommen, dass die Versiegelungseinrichtung durch elektromagnetische Strahlung das Trägerbandmaterial oberhalb des Schmelzpunktes (des Kunststoffes) erhitzt und dadurch kontaktlos die Versiegelungsspur erzeugt. Bei der an dieser Stelle eingesetzten elektromagnetischen Strahlung handelt es sich typischerweise um Wärmestrahlung (IR-Strahlung). Es ist auch denkbar, dass die Versiegelungseinrichtung auf einen (IR-) Laser zurückgreift, der beispielsweise unter Rückgriff auf entsprechende Infrarotstrahlung für die gewünschte Erhitzung des Trägerbandmaterials oberhalb des Schmelzpunktes des Kunststoffes und damit die kontaktlose Erzeugung der Versiegelungsspur sorgt. Beispielhaft können hier CO2-Laser eingesetzt werden.

Selbstverständlich sind auch Kombinationen derart möglich, dass die Versiegelungseinrichtung die Versiegelungsspur sowohl kontaktgebunden als auch kontaktlos erzeugt. In diesem Fall mag beispielsweise ein erhitzter Steg oder eine erhitzte Rolle zusätzlich mit einem Laser kombiniert werden. Auch eine Ultraschalleinheit ist in diesem Zusammenhang generell denkbar, um die Versiegelungsspur ohne Durchtrennen des textilen Trägerbandmaterials im Trägerbandmaterial zu definieren.

Gegenstand der Erfindung ist auch eine Vorrichtung zur Herstellung eines Klebebandes, wie sie im Anspruch 12 und 13 näher beschrieben wird. Ebenso ein Klebeband, welches gemäß dem vorgestellten Verfahren hergestellt wird und schließlich die Verwendung des solchermaßen hergestellten Klebebandes zum Umwickeln von Kabelbändern in Automobilen nach den Ansprüchen 14 und 15.

Im Ergebnis werden ein Verfahren und eine zugehörige Vorrichtung zur Herstellung eines Klebebandes beschrieben, die durch einen frappierend einfachen Aufbau überzeugen und besonders flexibel auf unterschiedliche gewünschte Breiten des hergestellten Klebebandes eingestellt werden können. Denn im Gegensatz zum Stand der Technik mit dem dortigen kammartigen Versiegelungsspurwerkzeug arbeitet die Erfindung völlig anders und konträr, indem das Trägerbandmaterial vorauseilend seitens der Versiegelungseinrichtung mit der Versiegelungsspur ausgerüstet wird. Das kann flexibel und je nach anschließend gewünschter Breite des auf diese Weise hergestellten Klebebandes vorgenommen werden. Naturgemäß lässt sich hierdurch auch die Anzahl der aus dem textilen Trägerbandmaterial hergestellten Klebebänder variieren. Das alles gelingt technologisch einfach und damit kostengünstig. Außerdem werden in diesem Zusammenhang im Vergleich zu herkömmlichen Produktionsgeschwindigkeiten deutlich erhöhte Produktionsgeschwindigkeiten beobachtet, die bis zu 40 m/min betragen können, wohingegen man bisher und herkömmlich Verarbeitungsgeschwindigkeiten von lediglich 10 m/min beobachtet hat. Das gilt selbstverständlich nur beispielhaft und ist keinesfalls einschränkend.

Nachfolgend wird die Erfindung anhand einer lediglich ein Ausführungsbeispiel darstellenden Zeichnung näher erläutert; es zeigen:
- Fig. 1: eine erfindungsgemäße Vorrichtung zur Herstellung eines Klebebandes und zur Durchführung des erfindungsgemäßen Verfahrens in einer grundsätzlichen Übersicht und
- Fig. 2: die Versiegelungseinrichtung inklusive Rollenschneidmesser in einer Detailansicht.

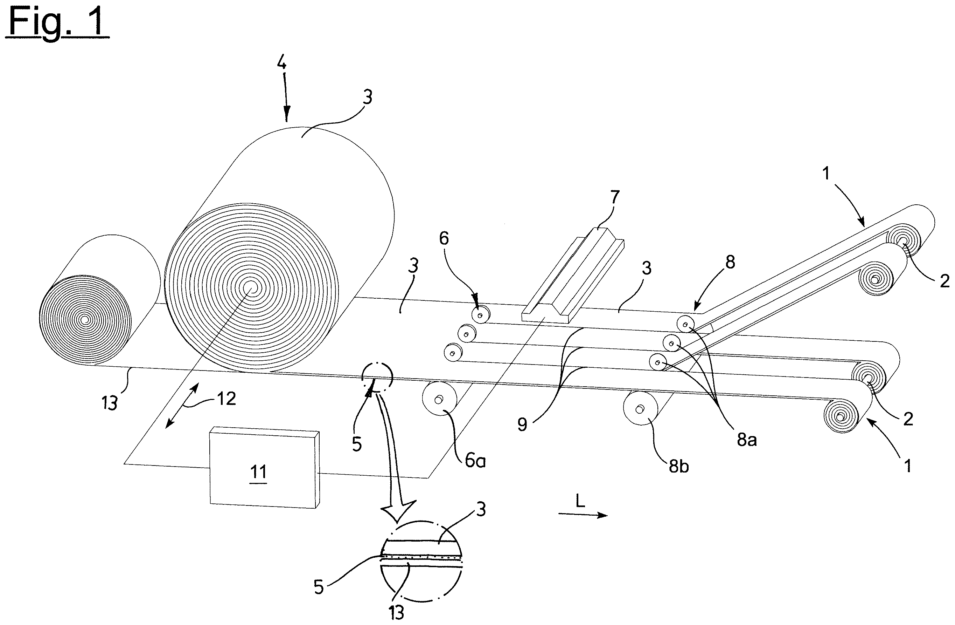

In der Fig. 1 ist eine Vorrichtung zur Herstellung eines Klebebandes 1 dargestellt. Tatsächlich werden ausgangsseitig der Vorrichtung die einzelnen (vier im Beispielfall) Klebebänder 1 beobachtet. Die Klebebänder 1 werden dazu auf jeweils auf Wickelrollen 2 aufgewickelt und anschließend konfektioniert.

Um das jeweilige Klebeband 1 herzustellen, wird eingangsseitig ein textiles Trägerbandmaterial 3 zugeführt, welches von einer Abwickelrolle 4 stammt. Das textile Trägerbandmaterial 3 wird zu diesem Zweck in der in Fig. 1 angedeuteten Längsrichtung L bewegt. Bei dem textilen Trägerbandmaterial 3 handelt es sich nach dem Ausführungsbeispiel um eine Gewebebahn oder auch eine Vliesstoffbahn. Außerdem kann das textile Trägerbandmaterial 1 auch als Veloursbahn, Gewirkebahn etc. ausgelegt sein. Ebenso sind Kombinationen denkbar, also ein Trägerbandmaterial 3, welches mehrschichtig aus mehreren verschiedenen oder auch gleichen der genannten textilen Bahnen aufgebaut ist.

Das textile Trägerbandmaterial 3 wird dabei von der Abwickelrolle 4 in der Längsrichtung L zugeführt. Dabei ist das Trägerbandmaterial 3 nach dem Ausführungsbeispiel und nicht einschränkend zusätzlich mit einer Klebebeschichtung 5 ausgerüstet, die zuvor mithilfe einer nicht dargestellten Auftragseinheit auf das Trägerbandmaterial 3 aufgebracht worden ist. Dabei wird nach dem dargestellten Ausführungsbeispiel so vorgegangen, dass das Trägerbandmaterial 3 mit seiner der Klebebeschichtung 5 gegenüberliegenden und beschichtungsfreien Rückseite nach oben in der Längsrichtung L bewegt wird, wie dies die Fig. 1 andeutet. Bei diesem Vorgang passiert die beschichtungsfreie Rückseite des textilen Trägerbandmaterials 3 erfindungsgemäß zunächst eine Versiegelungseinrichtung 6, anschließend eine optionale Sensorvorrichtung 7 und danach eine Längs-Schneideinrichtung 8 mit mehreren Rollenschneidmessern 8a. Tatsächlich sind an dieser Stelle drei Rollenschneidmesser 8a vorgesehen, die zur Ausbildung einzelner Längsstreifen (vier an der Zahl) und damit der Klebebänder 1 korrespondieren, die zum Abschluss auf den Wickelrollen 2 aufgewickelt werden.

Die einzelnen Rollenschneidmesser 8a sind nach dem Ausführungsbeispiel in der Lage, in das Trägerbandmaterial 3 Längsschnitte einbringen zu können, und zwar in Gestalt sogenannter Quetschschnitte. Dazu ist den einzelnen Rollenschneidmessern 8a gegenüberliegend eine Gegenrolle 8b realisiert, die als Stahlwalze mit gehärteter Oberfläche ausgebildet ist oder ausgebildet sein kann. Außerdem besteht die grundsätzliche Möglichkeit, dass die Klebebeschichtung 5 mit einem sogenannten Liner 13 abgedeckt wird, um etwaige Anhaftungen der Klebebeschichtung 5 an der Gegenrolle 8b zu vermeiden. Hierbei handelt es sich jedoch nicht um eine zwingende Maßnahme, sondern eine Option je nach eingesetzter Klebemasse für die Klebebeschichtung 5.

Wesentlich für die Erfindung ist nun der Umstand, dass zusätzlich die beheizbare und ortsfeste Versiegelungseinrichtung 6 vorgesehen ist, mit deren Hilfe die anschließend unter Rückgriff auf die ebenfalls ortsfesten Rollenschneidmesser 8a und die Gegenrolle 8b erzeugten Schnittkanten der hierdurch produzierten Klebebänder 1 versiegelt werden. Tatsächlich finden sich die Schnittkanten jeweils beidseitig des Klebebandes 1 in seiner Längserstreckung, handelt es sich folglich um die Längskanten des Klebebandes 1. Dabei ist erfindungsgemäß von besonderer Bedeutung, dass die Versiegelungseinrichtung 6 dem Rollenschneidmesser 8 örtlich und zeitlich voreilt. Dadurch definiert die Versiegelungseinrichtung 6 im textilen Trägerbandmaterial 3 jeweils eine Versiegelungsspur 9.

Man erkennt anhand der Übersichtsdarstellung in der Fig. 1, dass an dieser Stelle mithilfe der Versiegelungseinrichtung 6 insgesamt drei Versiegelungsspuren 9 im Trägerbandmaterial 3 bzw. an seiner klebebeschichtungsfreien Rückseite erzeugt werden. Diese drei Versiegelungsspuren 9 im dargestellten Beispielfall korrespondieren dazu, dass anschließend das textile Trägerbandmaterial 3 mit den drei Versiegelungsspuren 9 im Bereich dieser Versiegelungsspuren 9 durchtrennt wird, und zwar mithilfe der Längs-Schneideinrichtung 8 unter Rückgriff auf deren drei Rollenschneidmesser 8a. Als Folge hiervon wird das textile Trägerbandmaterial 3 im Anschluss an die Längs-Schneideinrichtung 8 in insgesamt vier Klebebänder 1 aufgefächert, die in jeweils zwei Längsstreifenbahnen unterteilt werden, die zum Abschluss je Längsstreifenbahn auf die dazugehörigen Wickelrolle 2 aufgewickelt werden.

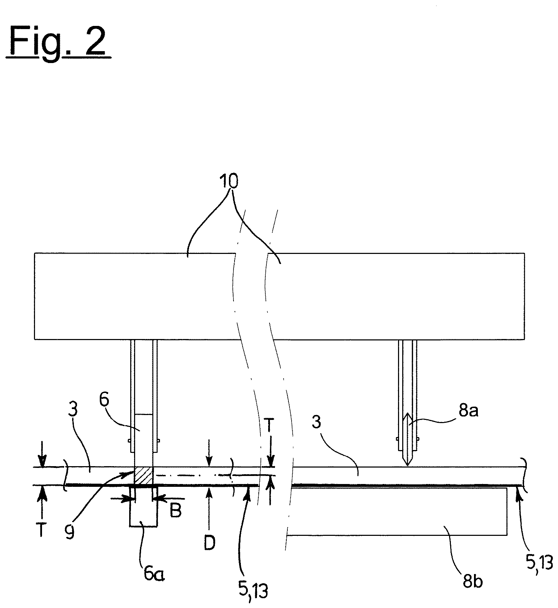

Anhand der Stirnansicht in der Fig. 2 erkennt man, dass die jeweilige Versiegelungseinrichtung 6 nach dem Ausführungsbeispiel als beheizter Steg 6 oder beheizte Rolle vorgegebener Breite B ausgebildet ist. Die fragliche beheizte Rolle bzw. nach dem Ausführungsbeispiel der beheizte Steg 6 ist dabei ebenso wie das jeweilige Rollenschneidmesser 8a ortsfest ausgebildet, wohingegen sich demgegenüber das textile Trägerbandmaterial 3 in der Längsrichtung L in Anlage hieran vorbeibewegt. Dadurch kann sich der Steg 6 ebenso wie das zugehörige Rollenschneidmesser 8a jeweils an dem textilen Trägerbandmaterial 3 abwälzen bzw. hieran entlanggleiten. Das mag durch einen Antrieb oder die jeweils angetriebene Gegenrolle 8b bzw. 6a unterstützt werden

Da der Steg 6 beheizt ist und über die Breite B verfügt, sorgt der beheizte Steg 6 insgesamt dafür, dass das Trägerbandmaterial 3 bzw. die an dieser Stelle realisierten Kunststofffasern und/oder Kunststofffilamente zumindest partiell im Bereich der anschließend gebildeten Versiegelungsspur 9 aufgeschmolzen werden. Die auf diese Weise erzeugte Versiegelungsspur 9 verfügt dabei über eine Spurbreite B, die von der Breite B des beheizten Steges 6 vorgegeben wird bzw. dieser entspricht. Außerdem sorgt der beheizte Steg 6 dafür, dass das Trägerbandmaterial 3 im Bereich der Versiegelungsspur 9 mit einer Spurtiefe T der Versiegelungsspur 9 verfestigt wird, die der Gesamtdicke D des textilen Trägerbandmaterials 3 entspricht. Das deutet die Fig. 2 im linken Teil an, welcher den verfestigten Bereich des Trägerbandmaterials 3 im Bereich der Versiegelungsspur 9 wiedergibt. Grundsätzlich ist es auch möglich, dass die Versiegelungsspur 9 nicht über die Gesamtdicke D des textilen Trägerbandmaterials 3 gesehen ausgebildet wird, sondern lediglich bis zu einer Spurtiefe und damit Teildicke T, die jedoch wenigstens 20% der Gesamtdicke D des Trägerbandmaterials 3 beträgt und sich entsprechend der Darstellung im rechten Teil der Fig. 2 ausgehend von dem beheizten Steg 6 bis zur gegenüberliegenden Rückseite des Trägerbandmaterials 3 erstreckt.

Im Rahmen des Ausführungsbeispiels sorgt die Versiegelungseinrichtung 6 dafür, dass die Versiegelungsspur 9 in das Trägerbandmaterial 3 kontaktgebunden eingebracht wird, nämlich mit Hilfe des beheizten Steges 6, der sich am Trägerbandmaterial 3 in Anlage entlangbewegt. Es ist aber auch möglich, dass die Versiegelungseinrichtung 6 die Versiegelungsspur 9 im Trägerbandmaterial 3 kontaktlos erzeugt, wie dies in der Beschreibungseinleitung bereits beschrieben wurde. Außerdem erkennt man rägerbandmaterial (3) kontaktlFig. 2, dass nach dem Ausführungsbeispiel die Versiegelungseinrichtung 6 und das Rollenschneidmesser 8a an eine gemeinsame ortsfeste Haltevorrichtung 10 angeschlossen sind, also eine ortsfeste Funktionseinheit 6, 8 definieren. Dann ist in der Regel die zwischengeschaltete Sensorvorrichtung 7 entbehrlich.

Es ist aber auch möglich, dass die Versiegelungseinrichtung 6 und das Rollenschneidmesser 8a bzw. die Längs-Schneideinrichtung 8 funktional voneinander getrennt ausgebildet sind. Dann wird das Trägerbandmaterial 3 mit den eingebrachten Versiegelungsspuren 9 zunächst aufgewickelt und in einem anschließenden nachfolgenden Schritt wieder abgewickelt und der Längs-Schneideinrichtung 8 zugeführt. In diesem Fall sorgt die der Längs-Schneideinrichtung 8 vorgeschaltete Sensorvorrichtung 7 dafür, dass die einzelnen Versiegelungsspuren 9 auch exakt so ausgerichtet sind oder werden, dass die einzelnen Rollenschneidmesser 8a die betreffende Versiegelungsspur 9 in etwa mittig durchtrennen und auch durchtrennen können.

Dazu ist die Sensorvorrichtung 7 im Beispielfall an eine Steuereinheit 11 angeschlossen, die ihrerseits eine Achse der Abwickelrolle 4 mit einem in der Fig. 1 angedeuteten Antrieb 12 in axialer Richtung beaufschlagt und dadurch das Trägerbandmaterial 3 im Bedarfsfall quer verschieben kann, um die gewünschte Ausrichtung zwischen einerseits den einzelnen Versiegelungsspuren 9 und andererseits der Längs-Schneideinrichtung 8 bzw. deren einzelnen Rollenschneidmessern 8a zu realisieren und umzusetzen. Zu diesem Zweck tastet die Sensorvorrichtung 7 die Versiegelungsspur 9 optisch ab. Tatsächlich mag es sich bei der Sensorvorrichtung 7 um eine oder mehrere Kameras handeln, die die Oberfläche des textilen Trägerbandmaterials 3 bzw. seiner Rückseite untersuchen und dadurch die jeweilige Versiegelungsspur 9 und ihre Position erfassen können. Denn im Bereich der Versiegelungsspur 9 verfügt die Rückseite des textilen Trägerbandmaterials 3 über eine abweichende Oberflächenstruktur, die beispielsweise über einen Bildvergleich mithilfe der Sensorvorrichtung 7 und der Steuereinheit 11 erfasst werden kann.

So oder so wird die Versiegelungseinrichtung 6 oberhalb des Schmelzpunktes des Trägerbandmaterials 3 erhitzt. Konkret bedeutet dies, dass die Temperatur der Versiegelungseinrichtung 6 und nach dem Ausführungsbeispiel der erhitzten Rolle 6 oberhalb des Schmelzpunktes des Kunststoffes angesiedelt ist, aus dem die Kunststofffasern/Kunststofffilamente bestehen, die wiederum das textile Trägerbandmaterial 3 definieren. Tatsächlich können an dieser Stelle beispielsweise Polyesterfasern, Polyamidfasern usw. eingesetzt werden, um nur einzelne denkbare Kunststoffe für die Kunststofffasern zu nennen. Die an dieser Stelle verarbeitbaren textilen Träger sind ausdrücklich nicht limitiert. D. h., es können Gewebe, Vliese, Gewirke, Veloure ebenso wie Mischformen verarbeitet werden. Als denkbare Kunststofffasern oder Kunststofffilamente kommen solche aus Polyester, Polyamid, PET, oder sogar PVC zum Einsatz, solange gewährleistet ist, dass die Temperatur des erhitzten Steges 6 diejenige des eingesetzten Kunststoffs überschreitet, sodass es im Bereich der jeweils erzeugten Versiegelungsspur 9 dazu kommt, dass die den textilen Träger 3 bildenden Fasern und/oder Filamente zumindest partiell aufgeschmolzen werden und die Versiegelungsspur 9 mit der Spurbreite B und der Spurtiefe T erzeugen. Das kann grundsätzlich auch kontaktlos durch eine kontaktlos arbeitende Versiegelungseinrichtung 6 herbeigeführt werden, was im Ausführungsbeispiel allerdings nicht dargestellt ist.

Als Material für den beheizten Steg 6 können Werkstoffe wie Eisen oder Stahl, Aluminium oder Kupfer eingesetzt werden. Auch ein aus Keramik hergestellter Steg 6 oder ein solcher mit Keramikbeschichtung ist in diesem Zusammenhang denkbar, um etwaige Anhaftungen zu vermeiden. Als mögliche Keramik hat sich hier Aluminiumnitrit als besonders günstig erwiesen. Das Rollenschneidmesser 8a ist demgegenüber typischerweise aus Stahl hergestellt. Für die Gegenwalze respektive Gegenrolle 8b bzw. 6a greift man demgegenüber auf Stahl oder auch Kunststoff oder Gummi als Beschichtung einer Stahlwalze zurück. Grundsätzlich kann die Gegenrolle 6a, 8b aber auch gänzlich als gehärtete Stahlwalze ausgebildet sein

### Bezugszeichenliste

- 1: Klebebänder /textiles Trägerbandmaterial
- 2: Wickelrollen /Aufwickelrollen
- 3: (textiles) Trägerbandmaterial
- 4: Abwickelrolle
- 5: Klebebeschichtung
- 6: Versiegelungseinrichtung /(beheizte) Rolle
- 6a: Gegenrolle
- 7: Sensorvorrichtung
- 8: Längs-Schneidvorrichtung
- 8a: Rollenschneidmesser
- 8b: Gegenrolle
- 9: Versiegelungsspur
- 10: Haltevorrichtung
- 11: Steuereinheit
- 12: Antrieb
- L: Längsrichtung
- B: Breite /Spurbreite
- D: Gesamtdicke
- T: Spurtiefe

## Patentansprüche

1. Verfahren zur Herstellung eines Klebebandes (1), insbesondere eines Wickelbandes zur Bündelung von Kabeln in Automobilen, wonach
ein textiles Trägerbandmaterial (3) gegebenenfalls inklusive Klebebeschichtung (5) von einer Abwickelrolle (4) in Längsrichtung (L) zugeführt und mittels einer Längs-Schneideinrichtung (8) in Längsstreifen geschnitten wird, wonach ferner
die Längs-Schneideinrichtung (8) wenigstens ein Rollenschneidmesser (8a) aufweist, und wonach
zusätzlich eine beheizbare Versiegelungseinrichtung (6) vorgesehen ist, mit deren Hilfe die Schnittkanten der Klebebänder (1) versiegelt werden,
**dadurch gekennzeichnet, dass**
die Versiegelungseinrichtung (6) der Längs-Schneideinrichtung (8) örtlich und zeitlich voreilt und eine Versiegelungsspur (9) im Trägerbandmaterial (3) definiert, die von dem folgenden Rollenschneidmesser (8a) durchtrennt wird.

2. Verfahren nach Anspruch 1, **dadurch gekennzeichnet, dass** die Versiegelungseinrichtung (6) und die Längs-Schneideinrichtung (8) eine Funktionseinheit (6, 8) definieren.

3. Verfahren nach Anspruch 1, **dadurch gekennzeichnet, dass** die Versiegelungseinrichtung (6) und die Längs-Schneideinrichtung (8) funktional getrennt voneinander ausgebildet sind.

4. Verfahren nach einem der Ansprüche 1 bis 3, **dadurch gekennzeichnet, dass** die Versiegelungsspur (9) mithilfe einer Sensorvorrichtung (7) gegenüber dem Rollenschneidmesser (8a) ausgerichtet wird, oder umgekehrt.

5. Verfahren nach Anspruch 4, **dadurch gekennzeichnet, dass** die Sensorvorrichtung (7) die Versiegelungsspur (9) abtastet, beispielsweise optisch mithilfe einer Kamera erfasst.

6. Verfahren nach einem der Ansprüche 1 bis 5, **dadurch gekennzeichnet, dass** das textile Trägerbandmaterial (3) zumindest größtenteils aus Kunststoff, beispielsweise aus Kunststofffasern und/oder Kunststofffilamenten zu wenigstens 50 Masse-%, hergestellt wird.

7. Verfahren nach einem der Ansprüche 1 bis 6, **dadurch gekennzeichnet, dass** die Versiegelungseinrichtung (6) die Versiegelungsspur (9) im Trägerbandmaterial (3) kontaktlos und/oder kontaktgebunden erzeugt.

8. Verfahren nach einem der Ansprüche 1 bis 7, **dadurch gekennzeichnet, dass** die Versiegelungseinrichtung (6) insbesondere den Kunststoff, vorzugsweise die Kunststofffasern und/oder Kunststofffilamente, im Trägerbandmaterial (3) soweit erhitzt, dass dieser bzw. diese zumindest im Bereich der Versiegelungsspur (9) aufschmelzen.

9. Verfahren nach Anspruch 8, **dadurch gekennzeichnet, dass** die Kunststofffasern und/oder Kunststofffilamente wenigstens bis zu einer Teildicke (T) des Trägerbandmaterials (3) im Vergleich zu seiner Gesamtdicke (D) miteinander zu der Versiegelungsspur schmelzend verbunden werden.

10. Verfahren nach einem der Ansprüche 1 bis 9, **dadurch gekennzeichnet, dass** die Versiegelungseinrichtung (6) oberhalb des Schmelzpunktes des Trägerbandmaterials (3) erhitzt wird und durch Kontakt mit dem Trägerbandmaterial (3) die Versiegelungsspur (9) erzeugt.

11. Verfahren nach einem der Ansprüche 1 bis 10, **dadurch gekennzeichnet, dass** die Versiegelungseinrichtung (6) durch elektromagnetische Strahlung das Trägerbandmaterial (3) oberhalb des Schmelzpunktes erhitzt und dadurch kontaktlos die Versiegelungsspur (9) erzeugt.

12. Vorrichtung zur Herstellung eines Klebebandes, insbesondere eines Wickelbandes zur Bündelung von Kabeln in Automobilen, vorzugsweise zur Durchführung des Verfahrens nach einem der Ansprüche 1 bis 11, mit einer Abwickelrolle (4) zur Aufnahme und Zufuhr eines textilen Trägerbandmaterials (3) gegebenenfalls inklusive Klebebeschichtung (5) in Längsrichtung (L), ferner mit einer Längs-Schneideinrichtung (8) mit wenigstens einem Rollenschneidmesser (8a), und mit einer zusätzlich vorgesehenen beheizbaren Versiegelungseinrichtung (6) zum Versiegeln der Schnittkanten des durch die Längs-Schneideinrichtung (8) in Längsstreifen geschnittenen textilen Trägerbandmaterials (3) und damit der Klebebänder (1),
**dadurch gekennzeichnet, dass**
die Versiegelungseinrichtung (6) der Längs-Schneideinrichtung (8) örtlich und zeitlich voreilt und eine Versiegelungsspur (9) im Trägerbandmaterial (3) definiert, die von dem folgenden Rollenschneidmesser (8a) durchtrennt wird.

13. Vorrichtung nach Anspruch 12, **dadurch gekennzeichnet, dass** zwischen der Versiegelungseinrichtung (6) und der Längs-Schneideinrichtung (8) eine Sensorvorrichtung (7) zur Ausrichtung der jeweiligen Versiegelungsspur (9) gegenüber dem Rollenschneidmesser (8a), oder umgekehrt, vorgesehen ist.

14. Klebeband, insbesondere Wickelband zur Bündelung von Kabeln in Automobilen, hergestellt nach dem Verfahren gemäß einem der Ansprüche 1 bis 11.

15. Verwendung eines Klebebandes nach Anspruch 14 als Wickelband zur Bündelung von Kabeln in Automobilen, wobei das Klebeband (1) spiralförmig oder als Längsumschlag um die Kabel herumgeführt und verklebt wird.

## Geänderte Patentansprüche

### Geänderte Patentansprüche gemäss Regel 137(2) EPÜ.

1. Verfahren zur Herstellung eines Klebebandes (1), insbesondere eines Wickelbandes zur Bündelung von Kabeln in Automobilen, wonach
ein textiles Trägerbandmaterial (3) inklusive Klebebeschichtung (5) von einer Abwickelrolle (4) in Längsrichtung (L) zugeführt und mittels einer Längs-Schneideinrichtung (8) in Längsstreifen geschnitten wird, wonach ferner
die Längs-Schneideinrichtung (8) wenigstens ein Rollenschneidmesser (8a) aufweist, und wonach
zusätzlich eine beheizbare Versiegelungseinrichtung (6) vorgesehen ist, mit deren Hilfe die Schnittkanten der Klebebänder (1) versiegelt werden,
**dadurch gekennzeichnet, dass**
die Versiegelungseinrichtung (6) der Längs-Schneideinrichtung (8) örtlich und zeitlich voreilt und das textile Trägerbandmaterial (3) mit seinem klebebeschichtungsfreien Rücken mit einer Versiegelungsspur (9) ausgerüstet wird, die anschließend mithilfe des zugehörigen folgenden Rollenschneidmessers (8a) überwiegend mittig durchtrennt wird.

2. Verfahren nach Anspruch 1, **dadurch gekennzeichnet, dass** die Versiegelungseinrichtung (6) und die Längs-Schneideinrichtung (8) eine Funktionseinheit (6, 8) definieren.

3. Verfahren nach Anspruch 1, **dadurch gekennzeichnet, dass** die Versiegelungseinrichtung (6) und die Längs-Schneideinrichtung (8) funktional getrennt voneinander ausgebildet sind.

4. Verfahren nach einem der Ansprüche 1 bis 3, **dadurch gekennzeichnet, dass** die Versiegelungsspur (9) mithilfe einer Sensorvorrichtung (7) gegenüber dem Rollenschneidmesser (8a) ausgerichtet wird, oder umgekehrt.

5. Verfahren nach Anspruch 4, **dadurch gekennzeichnet, dass** die Sensorvorrichtung (7) die Versiegelungsspur (9) abtastet, beispielsweise optisch mithilfe einer Kamera erfasst.

6. Verfahren nach einem der Ansprüche 1 bis 5, **dadurch gekennzeichnet, dass** das textile Trägerbandmaterial (3) zumindest größtenteils aus Kunststoff, beispielsweise aus Kunststofffasern und/oder Kunststofffilamenten zu wenigstens 50 Masse-%, hergestellt wird.

7. Verfahren nach einem der Ansprüche 1 bis 6, **dadurch gekennzeichnet, dass** die Versiegelungseinrichtung (6) die Versiegelungsspur (9) im Trägerbandmaterial (3) kontaktlos und/oder kontaktgebunden erzeugt.

8. Verfahren nach einem der Ansprüche 1 bis 7, **dadurch gekennzeichnet, dass** die Versiegelungseinrichtung (6) insbesondere den Kunststoff, vorzugsweise die Kunststofffasern und/oder Kunststofffilamente, im Trägerbandmaterial (3) soweit erhitzt, dass dieser bzw. diese zumindest im Bereich der Versiegelungsspur (9) aufschmelzen.

9. Verfahren nach Anspruch 8, **dadurch gekennzeichnet, dass** die Kunststofffasern und/oder Kunststofffilamente wenigstens bis zu einer Teildicke (T) des Trägerbandmaterials (3) im Vergleich zu seiner Gesamtdicke (D) miteinander zu der Versiegelungsspur schmelzend verbunden werden.

10. Verfahren nach einem der Ansprüche 1 bis 9, **dadurch gekennzeichnet, dass** die Versiegelungseinrichtung (6) oberhalb des Schmelzpunktes des Trägerbandmaterials (3) erhitzt wird und durch Kontakt mit dem Trägerbandmaterial (3) die Versiegelungsspur (9) erzeugt.

11. Verfahren nach einem der Ansprüche 1 bis 10, **dadurch gekennzeichnet, dass** die Versiegelungseinrichtung (6) durch elektromagnetische Strahlung das Trägerbandmaterial (3) oberhalb des Schmelzpunktes erhitzt und dadurch kontaktlos die Versiegelungsspur (9) erzeugt.

12. Vorrichtung zur Herstellung eines Klebebandes, insbesondere eines Wickelbandes zur Bündelung von Kabeln in Automobilen, vorzugsweise zur Durchführung des Verfahrens nach einem der Ansprüche 1 bis **11,** mit einer Abwickelrolle (4) zur Aufnahme und Zufuhr eines textilen Trägerbandmaterials (3) inklusive Klebebeschichtung (5) in Längsrichtung (L), ferner mit einer Längs-Schneideinrichtung (8) mit wenigstens einem Rollenschneidmesser (8a), und mit einer zusätzlich vorgesehenen beheizbaren Versiegelungseinrichtung (6) zum Versiegeln der Schnittkanten des durch die Längs-Schneideinrichtung (8) in Längsstreifen geschnittenen textilen Trägerbandmaterials (3) und damit der Klebebänder (1),
**dadurch gekennzeichnet, dass**
die Versiegelungseinrichtung (6) der Längs-Schneideinrichtung (8) örtlich und zeitlich voreilt und das textile Trägerbandmaterial (3) mit seinem klebebeschichtungsfreien Rücken mit einer Versiegelungsspur (9) ausgerüstet wird, die anschließend mithilfe des zugehörigen und folgenden Rollenschneidmessers (8a) überwiegend mittig durchtrennt wird.

13. Vorrichtung nach Anspruch 12, **dadurch gekennzeichnet, dass** zwischen der Versiegelungseinrichtung (6) und der Längs-Schneideinrichtung (8) eine Sensorvorrichtung (7) zur Ausrichtung der jeweiligen Versiegelungsspur (9) gegenüber dem Rollenschneidmesser (8a), oder umgekehrt, vorgesehen ist.
